# EUROPEAN PATENT SPECIFICATION

(11) **EP 2 701 209 B1**
(45) Date of publication and mention of the grant of the patent: **04.09.2019**
(21) Application number: 13761483.0
(22) Date of filing: 10.01.2013
(51) Int. Cl.: H01L 31/12, G02B 13/00, G01S 7/481, G01V 8/18, G02B 19/00, G01S 17/08, G01V 8/14

(54) **REFLECTIVE PHOTOELECTRIC SENSOR**
FOTOELEKTRISCHER REFLEKTIONSSENSOR
CAPTEUR PHOTOÉLECTRIQUE RÉFLÉCHISSANT

(30) Priority: 15.03.2012 JP 2012059127
(43) Date of publication of application: 26.02.2014
(73) Proprietor: Omron Corporation, Kyoto-shi, Kyoto 600-8530 (JP)
(72) Inventor: MARUMOTO Yuki, Kyoto-shi Kyoto 600-8530 (JP); OKUNO Motoharu, Kyoto-shi Kyoto 600-8530 (JP)
(74) Representative: Horn Kleimann Waitzhofer Patentanwälte PartG mbB
(86) International application number: PCT/JP2013/050271
(87) International publication number: WO 2013/136824

(56) References cited:
- EP-A2- 0 384 353
- CN-A- 102 313 882
- DE-U1-202005 018 197
- DE-U1-202006 012 038
- JP-A- H08 255 536
- JP-A- S62 134 603
- JP-A- 2003 204 077
- US-A- 4 907 026

## Description

### TECHNICAL FIELD

The present invention relates to a reflection-type photoelectric sensor including an optical system having a configuration in which a light beam for detection (hereinafter referred to as a "detecting light beam") is projected and a reflected light beam of the detecting light beam is received. Particularly the present invention relates to a "restricted-reflection-type" photoelectric sensor that performs detection processing in which a detection target range is restricted.

### BACKGROUND ART

In restricted-reflection-type photoelectric sensors, generally a light projecting part including a light projecting element and a light projecting lens and a light receiving part including a light receiving element and a light receiving lens are disposed in one casing, the light receiving part receives a reflected light beam of a detecting light beam output from the light projecting part, and whether an object is present is checked based on a generated signal of a light receiving amount.

Restricted-reflection-type photoelectric sensors can be roughly divided into sensors in which a condensing optical system is used and sensors in which a divergent optical system is used. For example, Patent Document 1 discloses a sensor in which a condensing optical system is used, and Patent Document 2 discloses a sensor in which a divergent optical system is used.

In both types of sensors, an overlapping portion of a region where a detecting light beam output from the light projecting part travels and a region where a light beam entering into the light receiving part to form an image on the light receiving element travels constitutes a detection area. However, a region of the detection area and a detection capacity vary depending on characteristics of the optical system.

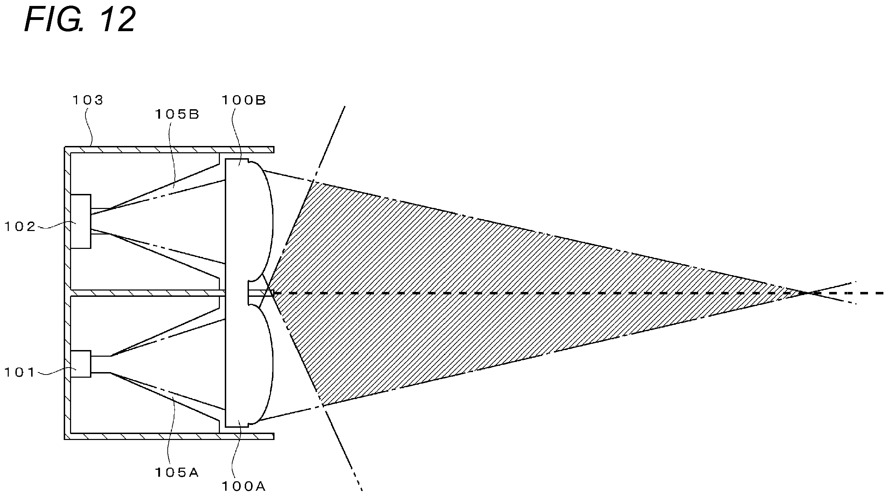

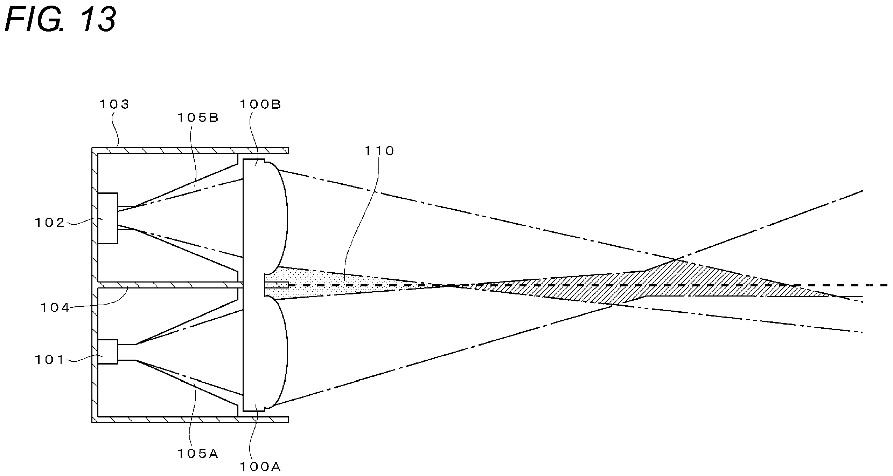

FIGS. 12 and 13 schematically illustrate the detection principles of the divergent optical system and the condensing optical system, respectively. In FIGS. 12 and 13, the numeral 101 designates the light projecting element, the numeral 102 designates the light receiving element, the numeral 100A designates the light projecting lens, and the numeral 100B designates the light receiving lens. The light projecting lens 100A and the light receiving lens 100B are coupled as one lens member, and attached to an opening end surface of a lens holder 103 including two light guide paths 105A and 105B. The light projecting lens 100A is disposed in front of the light guide path 105A, and the light receiving lens 100B is disposed in front of the light guide path 105B. The light projecting element 101 and the light receiving element 102 are supported by being mounted on a board (not illustrated) at rear ends of the light guide paths 105A and 105B, respectively.

In FIGS. 12 and 13, the detecting light beam output from the light projecting element 101 is indicated by an alternate long and short dash line, and the light beam entering into the light receiving element 102 is indicated by an alternate long and two short dashes line.

As illustrated in FIG. 12, in the divergent optical system, the detecting light beam output from the light projecting lens 100A spreads over a wide range, and the light receiving lens 100B condenses the light beam from a wide range. Therefore, the detection area spreading largely near the sensor can be set as illustrated by the hatched portion in FIG. 12.

On the other hand, in the condensing optical system, the detecting light beam output from the light projecting lens 100A is condensed at a predetermined position as illustrated in Fig. 13. Because the range of the reflected light beam of the light receiving target is narrowed with increasing distance from the sensor, the detection area is restricted to a neighborhood of a center axis of the optical system as illustrated in the hatched area of Fig. 13. An area constituting a dead zone (a region 110 in FIG. 13) is generated because the light projecting region does not intersect the light receiving region at a position close to the sensor.

Patent Document 2 describes that the same dead zone is generated in a sensor having a divergent optical system. However, as described in Japanese Patent Document 2, in the divergent optical system, the range where the detecting light beam spreads is changed by adjusting an optical axis or a curvature of the lens, which allows the dead zone to be reduced.

As described above, sensors in which a divergent optical system is used are suitable for detection at a position relatively close to the sensor (hereinafter referred to as "detection in a short distance"). However, because the detecting light beam is diffused and weakened with increasing distance from the sensor, accuracy of the detection (hereinafter referred to as "detection in a long distance") at a position relatively distant from the sensor is hardly ensured.

On the other hand, in sensors in which a condensing optical system is used, the detecting light beam in which the light quantity density is enhanced can travel over a long distance. Because a beam diameter of the detecting light beam decreases, even if a surface that receives the detecting light beam is inclined, the detecting light beam can be reflected toward a direction, in which the detecting light beam impinges on the light receiving element, with no influence due to the inclination.

Therefore, according to the condensing optical system, the detection can stably be performed in the long distance. However, the detection is problematic for short distances because the dead zone is generated near the sensor.

Thus, in both the optical systems, there are merits and demerits. Therefore, Patent Document 3 describes that a light projecting element for long distances and a light projecting elements for the short distance are combined and a light receiving element is disposed at the back of the light projecting elements to enable detection in both short distances and long distances.

EP 0 384 353 A2 describes a reflective type photoelectric switch which projects emitted light from a light emitting element toward a detection zone by a light projecting optical system and guides reflected light from an object to be detected in the detection zone to a light receiving element by a light receiving optical system.

US 4 907 026 describes a focus detecting light projecting system for detecting the focus state of a photo-taking optic by projecting a pattern with a light projecting lens onto a photographing object and by receiving a reflected image of the pattern reflected from the object.

CN 102 313 882 A describes an optical system structure of a laser range finder comprising a laser emission source, a collimating lens, which is arranged in front of the laser emission source, an optical receiver, a receiving objective lens, which gathers reflected light rays to the optical receiver.

DE 20 2006 01 2038 U1 describes an optical distance measurement device that includes a light emitter for emitting a measurement light, an aligning objective lens system for aligning the measurement light emitted from said light emitter, a receiving objective lens system for receiving and converting the reflected measurement light, and a light receiver for receiving the reflected measurement light passing through the receiving objective lens system and outputting a corresponding electrical signal.

JP S62 134 603 A describes a photoelectric switch for detecting objects from a close distance up to a long distance by using a Fresnel lens consisting of plural partial lenses which are different in excentricity and radius of curvature from one another in accordance with positions of lens faces as the lens in light projecting and light receiving parts to extend the range of reception of irrigated light.

DE 20 2005 018197 U1 describes a laser distance measuring device for measuring the distance to an object.

### PRIOR ART DOCUMENTS

### PATENT DOCUMENTS

Patent Document 1: Japanese Patent No. 3297968
Patent Document 2: Japanese Unexamined Patent Publication No. 2011-107019
Patent Document 3: Japanese Unexamined Patent Publication No. 2010-258237

### SUMMARY OF THE INVENTION

### PROBLEMS TO BE SOLVED BY THE INVENTION

Nowadays, there is a demand for development of a compact, high-performance sensor in order to apply the sensor to various applications. In order to overcome a market competition, it is necessary to produce sensors satisfying the demand with a low cost.

In the invention disclosed in Patent Document 3, the two light projecting elements are combined, and the light receiving element is deviated from the light projecting elements, which allows the detection to be performed in both the short distance and the long distance. However, the configuration in Patent Document 3 leads to the enlargement of the optical system. When the number of light projecting elements is increased, power consumption increases in addition to an enlargement of a circuit, which results in a cost increase.

The present invention has been devised to solve the problems described above, and an object thereof is to provide a compact, cost-reduced reflection-type photoelectric sensor in which the detection can be performed in both the short distance and the long distance by adding a simple configuration to the optical system.

### MEANS FOR SOLVING THE PROBLEM

The present invention is applied to a reflection-type photoelectric sensor having the features of claim 1.

According to the configuration, the detection area is set at some region distant from the sensor by the first detecting light beam, and the detection area of the second detecting light beam is set in front of the detection area of the first detecting light beam. Therefore, the detection can be performed in both the short distance and the long distance. In the second detecting light beam, because the same light projecting element as the first detecting light beam is used as the light source, the optical system is not significantly enlarged and the light projecting circuit does not become complicated. Therefore, the enlargement of the sensor can be prevented.

In a first aspect of the reflection-type photoelectric sensor, the light projecting lens includes a lens body constituted by a condensing lens and a light-projecting-side protrusion that protrudes from part of a backside of the lens body. The light-projecting-side protrusion includes an inclined surface that is inclined along a direction in which the light projecting lens and the light receiving lens are lined up, and the light-projecting-side protrusion and part of the lens body contiguous with the light-projecting-side protrusion act as the means for generating the second detecting light beam.

In the first aspect, the light receiving lens may also include a lens body constituted by a condensing lens and a light-receiving-side protrusion that protrudes from part of a backside of the lens body. The light-receiving-side protrusion includes an inclined surface that is inclined along a direction in which the light projecting lens and the light receiving lens are lined up, and the light-receiving-side protrusion and part of the lens body contiguous with the light-receiving-side protrusion serve as a means for guiding a reflected light beam of the second detecting light beam entering into the light receiving lens to the light receiving element.

Desirably the light-projecting-side protrusion and the light-receiving-side protrusion are narrow lens bodies in each of which an inclined direction of the inclined surface is set to a lengthwise direction. At least one such lens body can be provided with respect to the corresponding lens. In the case that the plural protrusions are provided, an orientation of the inclined surface is adjusted according to the position of each protrusion, and the light beam through the inclined surface may collect in the central portion of the lens body.

In the first aspect, the light beam diverging function is added to the light projecting lens by providing the light-projecting-side protrusion in the backside of the light projecting lens in which the condensing lens is used as the main body. When the protrusion is provided in the backside of the lens, because the protrusion is located in the light guide path between the light projecting element and the light projecting lens, there is no risk of enlarging the optical system. The forming is also easy.

In second and third aspects , the light projecting lens and the light receiving lens are condensing lenses, and another member is used to generate the second detecting light beam.

In the second aspect, a cover body including a light-projecting-side protrusion that protrudes from a point facing part of the light projecting lens is attached to a front end of the lens holder. The light-projecting-side protrusion includes an inclined surface that is inclined along a direction in which the light projecting lens and the light receiving lens are lined up, and the light-projecting-side protrusion and part of the cover body contiguous with the light-projecting-side protrusion act as the means for generating the second detecting light beam.

In the second aspect, a light-receiving-side protrusion having a similar inclined surface may be provided at a point facing part of the light receiving lens of the cover body. The light-receiving-side protrusion and part of the cover body contiguous with the light-receiving-side protrusion act as a part that changes a direction of an optical path of a reflected light beam of the second detecting light beam entering into the cover body to a direction toward the light receiving element through the light receiving lens.

In the second aspect, desirably the light-projecting-side protrusion and the light-receiving-side protrusion are narrow lens bodies in each of which an inclined direction of the inclined surface is set to a lengthwise direction. At least one such lens body can be provided with respect to the corresponding lens. The protrusion may be provided in the rear surface (the surface on the side facing the light projecting lens or the light receiving lens) of the cover, or in the front surface (the surface from which the detecting light beam is output) of the cover.

According to the second aspect, the simple configuration is added to the cover body attached to the front end of the lens holder, which allows the second detecting light beam to be generated without changing the configuration of the main optical system in the lens holder.

An optical member that refracts the light beam, which travels from the light projecting element toward an inner wall surface in the light projecting element side of the lens holder, in a direction toward the light projecting lens may be provided on the inner wall surface. The optical member and a portion of the light projecting lens act as the means for generating the second detecting light beam, the portion of the light projecting lens receiving the light beam refracted by the optical member.

A second optical member that guides the light beam, which travels toward an inner wall surface in the side of the light receiving element after entering into the light receiving lens, to the light receiving element can be provided on the inner wall surface of the lens holder, the inner wall surface being in the side of the light receiving element.

The second detecting light beam may be generated by the optical member provided on the inner wall surface of the lens holder and the light projecting lens of the condensing lens, so that the second detecting light beam can be generated without changing the configuration of the optical system in the lens holder.

### EFFECTS OF THE INVENTION

According to the present invention, the detection can be performed in both the short distance and the long distance by guiding the second detecting light beam to the region close to the sensor, in which the detection cannot be performed by the first detecting light beam of the condensing optical system. In the second detecting light beam, the same light projecting element as the first detecting light beam is used as the light source, and the second detecting light beam can be generated by adding the simple configuration to the lens holder or the member (such as a lens and a cover) attached to the lens holder.

Therefore, the detection capacity can be enhanced without enlarging the sensor. Because the cost does not increase, the reflection-type photoelectric sensor can be provided at a reasonable price.

### BRIEF DESCRIPTION OF THE DRAWINGS

FIG. 1 is a view illustrating a configuration and a detection principle of an optical system of a reflection-type photoelectric sensor according to a first embodiment of the present invention;
FIG. 2 is a perspective view illustrating a specific configuration of the optical system in FIG. 1;
FIG. 3 is a perspective view illustrating a configuration of a lens member incorporated in the optical system;
FIG. 4(1) is a front view of the lens member, FIG. 4(2) is a rear view of the lens member, and FIG. 4(3) is a side view of the lens member;
FIG. 5 is a view illustrating a relationship between optical paths of first and second detecting light beams and detection areas;
FIG. 6 is a view illustrating another example of an optical system in which a light diverging function is incorporated and a problematic point thereof;
FIGS. 7(1-a) and 7(1-b) illustrate a basic configuration of a protrusion of a lens body, and FIGS. 7(2) to 7(4) illustrate modifications of the number of protrusions and a position where the protrusion is disposed;
FIGS. 8(1) and 8(2) are views illustrating a configuration and a detection principle of an optical system of a reflection-type photoelectric sensor according to a second embodiment of the present invention;
FIG. 9 is a view illustrating a configuration and a detection principle of an optical system of a reflection-type photoelectric sensor according to a third embodiment of the present invention;
FIG. 10 is a view illustrating a configuration and a detection principle of an optical system of a reflection-type photoelectric sensor according to an example useful for understanding the invention;
FIG. 11 is a view illustrating a configuration and a detection principle of an optical system of a reflection-type photoelectric sensor according to an example useful for understanding the invention;
FIG. 12 is a view illustrating the detection principle by a divergent optical system; and
FIG. 13 is a view illustrating the detection principle by a condensing optical system.

### MODE FOR CARRYING OUT THE INVENTION

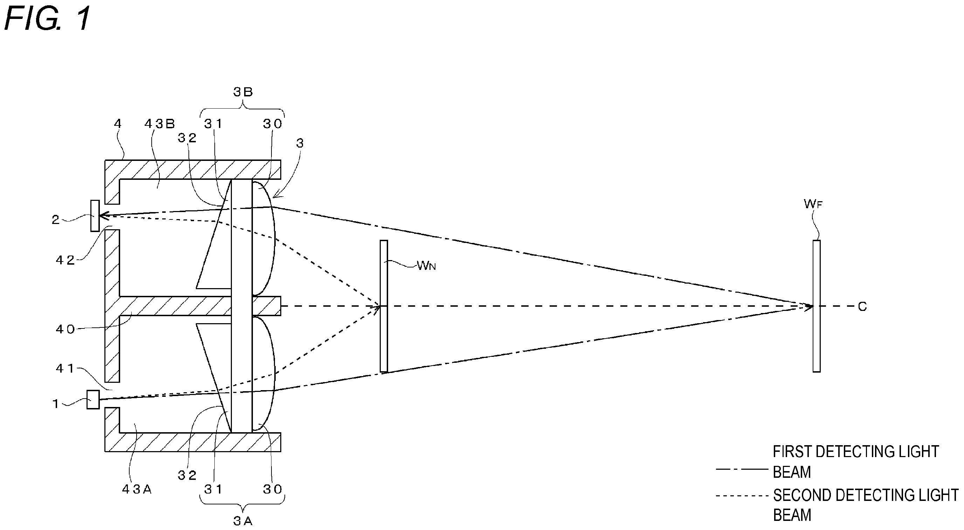

FIG. 1 is a view illustrating a configuration and a detection principle of an optical system of a reflection-type photoelectric sensor to which the present invention is applied.

The optical system of this embodiment includes a light projecting element 1, a light receiving element 2, a lens member 3 that is disposed in front of the elements 1 and 2, and a lens holder 4 that supports the lens member 3 at its front end. The light projecting element 1 and the light receiving element 2 are disposed behind the lens holder 4 and are mounted on a circuit board 5 described later. In a rear surface of the lens holder 4, apertures 41 and 42 are provided at points corresponding to the light projecting element 1 and the light receiving element 2, respectively. A wall 40 is provided in the lens holder 4, and divides a space in the lens holder 4 into a light projecting light guide path 43A and a light receiving light guide path 43B. In a configuration of the lens holder 4, a center axis C of the optical system is set at a position corresponding to a center position of the wall 40 in the drawings including FIG. 1.

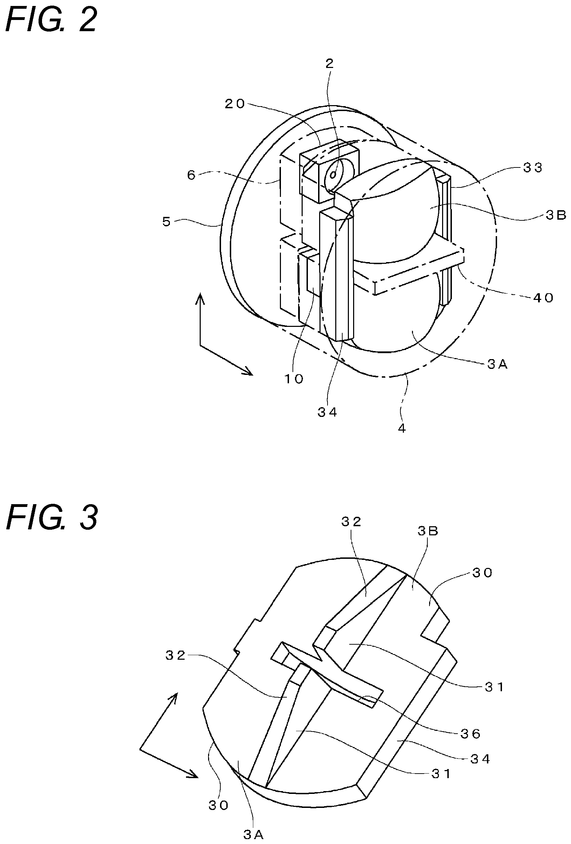

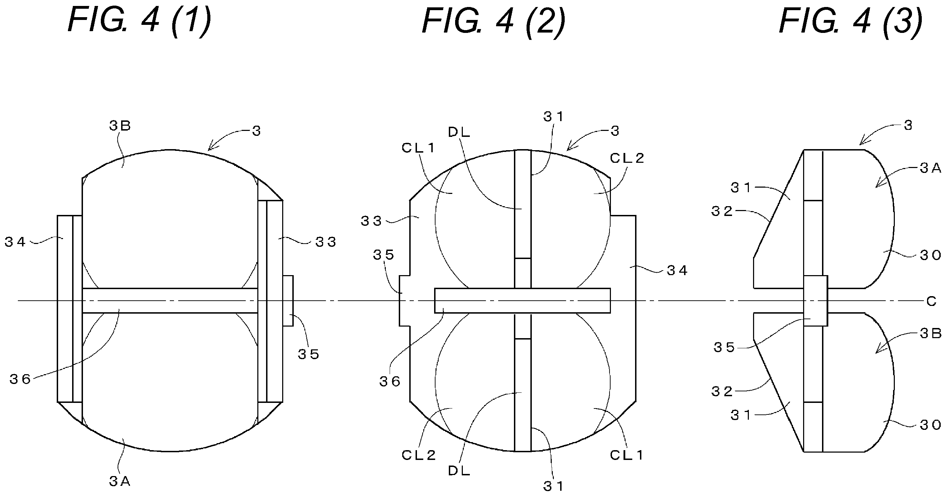

The lens member 3 of this embodiment has a configuration in which a light projecting lens 3A and a light receiving lens 3B are coupled. A hole 36 (see FIGS. 3 and 4 described later) having a width corresponding to the wall 40 is made in a boundary between the lenses 3Aand 3B, and the wall 40 is inserted in the hole 36 to contact with both side edges on steps (not illustrated) of an inner wall surface of the lens holder 4, whereby the lens member 3 is supported by the front end of the lens holder 4.

Because the light projecting lens 3A and the light receiving lens 3B are symmetrical in relation to the center axis C, the detailed structures of the lenses 3A and 3B are designated by the same numeral. Each of the lenses 3A and 3B of this embodiment includes a lens body 30 whose front surface is formed into a convex surface and a protrusion 31 that protrudes partially from a rear surface of the lens body 30. Except for the protrusions 31, the rear surface of the lens body 30 is a flat surface.

Each protrusion 31 is a narrow lens body in which a direction along a direction in which the lenses 3Aand 3B are lined up is a lengthwise direction, and a thickness of the protrusion 31 increases toward the other lens. Specifically, both side surfaces of the protrusion 31 are formed into triangles, and a narrow rear surface 32 between the side surfaces is formed into an inclined surface that is inclined along the direction in which the lenses 3Aand 3B are lined up.

Although a main portion of each lens body 30 is a condensing lens, that region that is contiguous with the protrusion 31 in a thickness direction of the lens body 30 and the protrusion 31 generate a function of causing the light to diverge. The light output from the light projecting element 1 travels in the light guide path 43A while spreading, and the whole rear surface of the light projecting lens 3A is irradiated with the light. At this point, the light passing through the protrusion 31 differs from the light passing through the portion other than the protrusion 31 in the optical path. Similarly, in the light receiving lens 3B, the protrusion 31 differs from the portion other than the protrusion 31 in the optical path of the condensing target light.

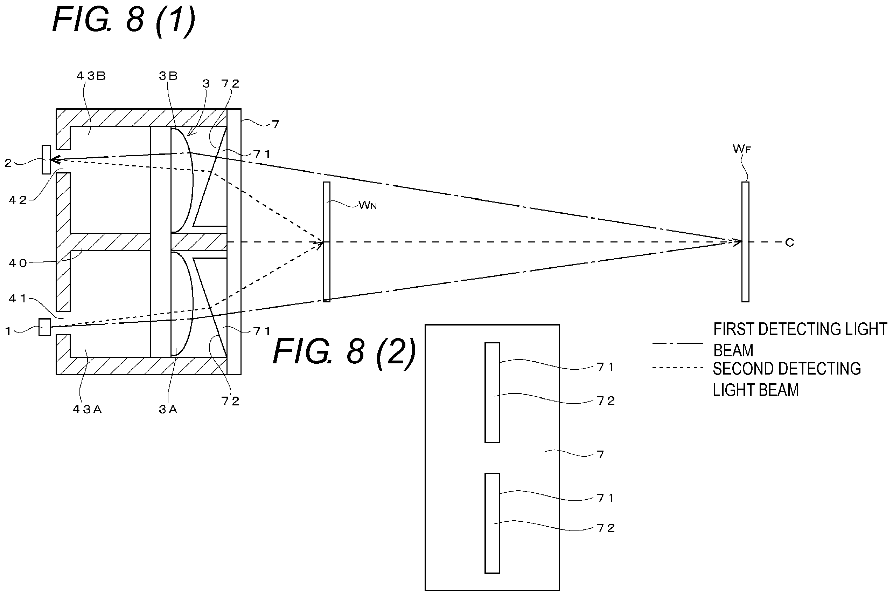

In FIG. 1, the detecting light beam generated by the function of the condensing lens in the light projecting lens 3A is referred to as a "first detecting light beam", and a main optical path of the first detecting light beam is indicated by an alternate long and short dash line. On the other hand, the detecting light beam generated by the light passing through the protrusion 31 is referred to as a "second detecting light beam", and a main optical path of the second detecting light beam is indicated by a dotted line (the same holds true in FIGS. 8 to 11 described later). In FIG. 1, workpieces W_{F} and W_{N} having plate shapes are illustrated as the detection target.

A majority of the light beam entering into the light projecting lens 3A from the light projecting element 1 is gently refracted, travels while coming gradually close to the center axis C, and reaches the center axis C at a point distant from a sensor. The light beam reflected by the workpiece W_{F}, on which the first detecting light beam traveling to the position close to the center axis C impinges, travels while separating gradually from the center axis C, impinges on the light receiving lens 3B, and is guided to the light receiving element 2.

On the other hand, because the inclined surface 32 of the light projecting lens 3A acts as a prism, the light guided to the protrusion 31 on the backside of the light projecting lens 3A is refracted more strongly, impinges on the lens body 30, and is guided to a convex front surface. As a result, the light that is refracted at an angle steeper than that of the surrounding is output from a band region corresponding to the protrusion 31 of the front surface. This light becomes the second detecting light beam that intersects the center axis C and the light-receiving-side optical path at a position further forward than a region where the first detecting light beam can be received.

In the light receiving lens 3B, by the same function, the second detecting light beam that is reflected by the workpiece W_{N} located further forward than the region where the first detecting light beam can be detected is guided from the lens body 30 to the light receiving element 2 through the protrusion 31.

As described above, in the light projecting lens 3A and the light receiving lens 3B of this embodiment, the divergent function is added to part of the lens body 30 having the condensing function. In other words, a hybrid-type optical system including both elements of the condensing optical system and the divergent optical system is set by the lenses 3A and 3B, the light projecting element 1, and the light receiving element 2.

In this optical system, two kinds of detecting light beams can be generated by the light output from one light projecting element 1, and reflected light beams corresponding to the respective detecting light beams can be received.

Because the main portion of the lens body 30 is a condensing lens, the first detecting light beam can be condensed with sufficient intensity to stabilize the detection of the long distance.

Although the proportion of the region having the function of causing the light to diverge is small, the second detecting light beam can diverge into the region close to the sensor, which is a dead zone in the case of detection only with the first detecting light beam described later, by adjusting an inclined angle of the protrusion 31 of the backside or a curvature of the front surface. Therefore, detection accuracy can be ensured in a short distance.

A specific embodiment of the optical system in FIG. 1 will be described in detail below.

FIG. 2 is a perspective view illustrating an entire configuration (a configuration in the lens holder 4) of the optical system, and FIG. 3 is a perspective view illustrating a configuration on the rear surface side of the lens member 3 used in the optical system. FIG. 4(1) is a front view of the lens member 3, FIG. 4(2) is a rear view of the lens member 3, and FIG. 4(3) is a side view of the lens member 3.

In FIG. 2, a package 10 includes the light projecting element 1, and a package 20 includes the light receiving element 2. The package 20 in which the light receiving element 2 is accommodated can be constructed by a photo IC in which a circuit processing a signal of a light receiving amount is incorporated.

Each of the packages 10 and 20 is supported and electrically connected by a circuit board 5. In FIG. 2, a circumferential wall of the lens holder 4 is slightly extended, and a protective holder 6 is integrally provided in the extended portion in order to protect the packages 10 and 20. The circuit board 5 is supported between an opening end surface on the rear surface side of the lens holder 4 and a board holder (not illustrated), thereby positioning the packages 10 and 20 on the board 5 in the protective holder 6.

The lens member 3 of this embodiment has a configuration in which the light projecting lens 3A and the light receiving lens 3B are coupled by a pair of coupling parts 33 and 34 extended toward both side edges. The light projecting lens 3A and the light receiving lens 3B are coupled by the coupling parts 33 and 34 while facing each other with a slight gap 36. The gap 36 serves as a hole for inserting the wall 40. A protrusion piece 35 protruding outward is formed in a central portion of the coupling part 33.

The lens member 3 having the above configuration is supported at a position that is slightly inside of an aperture end edge in a front surface of the lens holder 4. Each of the coupling parts 33 and 34 is supported by a step provided in an inner wall of the lens holder 4. A recess is continuously formed in the step corresponding to the coupling part 33, in which the protrusion piece 35 is formed, in order to insert the protrusion piece 35. The engagement of the recess and the protrusion piece 35 and the penetration of the wall 40 in the insertion hole 36 complete an alignment of the lens member 3 in the lens holder 4.

Although not illustrated in FIG. 2, a cover 7 having a translucent property is attached to the aperture end edge in the front surface of the lens holder 4 as described later. The cover 7 prevents dust from adhering to the lens member 3 or the inside of the lens holder 4. Alternatively, a lens member having a slight curvature may be used as the cover to adjust the optical path of each detecting light beam.

In the perspective view in FIG. 3 or the side view in FIG. 4(3), in the lens member 3 of this embodiment, a flat surface is formed by leveling an end (the thickest point) on the side of the center axis C in the inclined surface 32 of the protrusion 31. Alternatively, like the embodiment in FIG. 1, the whole rear surface of the protrusion 31 may be formed as the inclined surface. The inclination of the inclined surface 32 is not limited to a linear change, but may be a curved change.

In the rear view in FIG. 4(2), a portion DL has a diverging function for each of the light beams of the lenses 3A and 3B, and convergent light beams on both sides of the portion DL are output from portions CL1 and CL2. For the sake of convenience, the portion DL is referred to as a divergent lens, and the portions CL1 and CL2 are referred to as condensing lenses.

As illustrated in FIG. 4(2), in the lenses 3A and 3B of the specific example, the narrow divergent lens DL (the protrusion 31 and the portion that continues to the protrusion 31 along a thickness direction in the lens body 30) is located in a central portion of a width on a crosswise side of the lens body 30, and the wide condensing lenses CL1 and CL2 are located so as to sandwich the divergent lens DL. According to the light projecting lens 3A of the configuration, the first detecting light beam is output from each of the condensing lenses CL1 and CL2 with sufficient intensity, so that the detection accuracy can be ensured for long distances. Additionally, because the divergent light beam is output from the band region in the center portion that protrudes furthest forward in the front surface of the lens body 30, the divergent function can sufficiently be ensured even in the small region and the detection accuracy of the second detecting light beam can also be ensured.

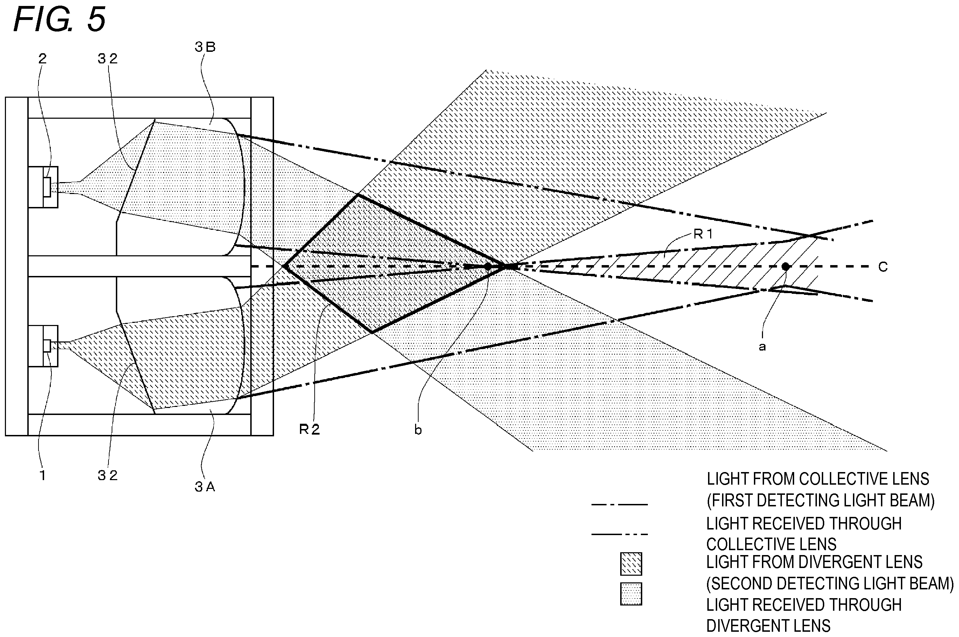

FIG. 5 schematically illustrates a relationship between the optical paths of the detecting light beams in the optical system having the above configuration and the detection areas set by the detecting light beams. Specifically, the first detecting light beams of the condensing lenses CL1 and CL2 are indicated by the alternate long and short dash line, the reflected light beams thereof are indicated by the alternate long and two short dashes line, and the second detecting light beam of the divergent lens DL and the reflected light beams thereof are indicated by different patterns.

In FIG. 5, the lens member 3 in the lens holder 4 is illustrated only by its outside contour. As is clear from the contour, the inclined surfaces 32 of the light projecting lens 3A and the light receiving lens 3B are positioned in ranges corresponding to the whole widths of the optical paths of the light projecting element 1 and the light receiving element 2.

In FIG. 5, the first detecting light beams of the condensing lenses CL1 and CL2 in the light projecting lens 3A condense in the region around point a on the center axis C of the optical system. A region R1 (indicated by a diagonal-line pattern), where the traveling region (the region indicated by the alternate long and short dash line) of the first detecting light beam and the region (the region indicated by the alternate long and two short dashes line) where the light beam being able to be received through the condensing lenses CL1 and CL2 in the light receiving lens 3B overlap each other, constitutes the detection area of the first detecting light beam.

Hereinafter, the detection area R1 is referred to as a first detection area R1, and the point intersecting the center axis C at the front of the first detection area R1 is referred to as point b.

The second detecting light beam from the divergent lens DL in the light projecting lens 3A is largely refracted in a direction from a belt-like convex surface in the front surface toward the center axis C. In FIG. 5, the inclined angle of the protrusion 31 or the curvature of the front surface of the lens body 30 is adjusted such that a luminous flux of the second detecting light beam intersects the center axis C and the optical path of the light receiving lens 3B in front of the first detection area R1. Because the light receiving lens 3B has the same configuration as the light projecting lens 3A, the region of the reflected light beam guided to the light receiving element 2 through the divergent lens DL on the side of the light receiving lens 3B intersects the center axis C in front of the first detection area R1.

In FIG. 5, a boundary line of a region R2, where the traveling region (indicated by a dotted-line pattern) of the second detecting light beam and a region where the light beam being able to be received by the divergent lens DL in the light receiving lens 3B travels overlap each other, is indicated by an extra-thick line. The region R2 constitutes the detection area of the second detecting light beam. Hereinafter, the detection area R2 is referred to as a second detection area R2.

Because the second detection area R2 spreads from the position close to the sensor and continues into the first detection area R1, an object can be detected in the region where the detection areas R1 and R2 are added, namely, the region from a front end position of the second detection area R2 to a rear end position (not illustrated in FIG. 5) of the first detection area R1.

The detection distance that can be guaranteed by the detection areas R1 and R2 varies depending on the conditions. For example, in the case that the first detecting light beam is condensed at a position about 40 mm away from the sensor, the object can stably be detected up to a range of 70 to 80 mm away from the sensor. The object can stably be detected in the region from the position close to the sensor to a condensing point of the first detecting light beam. On the other hand, a detection result of" object present" is not obtained with respect to workpieces located more than 100 mm away from the sensor.

In FIG. 5, the traveling region of the second detecting light beam crosses the region (the alternate long and two short dashes line) of the light beam received through the condensing lenses CL1 and CL2 in the light receiving lens 3B in front of the first detection area R1, the object can be detected in a region, where the region indicated by the alternate long and two short dashes line and the traveling region of the second detecting light beam intersect each other. Therefore, even if not the divergent function but only the condensing function is provided in the light receiving lens 3B, the workpiece having a certain level of size can be detected in front of the first detection area R1.

However, when the divergent lens DL is provided in the light receiving lens 3B, the object can stably be detected in the wide range close to the sensor. The detection accuracy is ensured around the center axis C in the neighborhood of the sensor, so that also very small objects can be detected reliably.

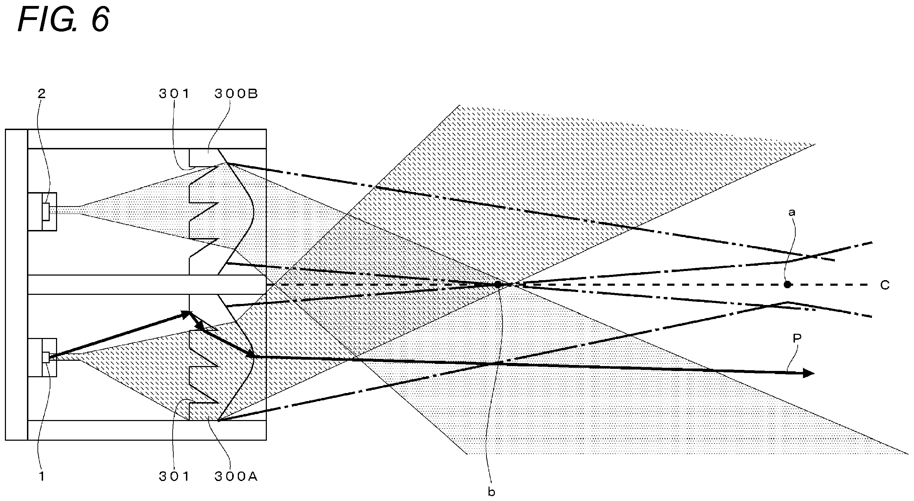

Another example of the optical system having both a condensing optical system and a divergent optical system will be described as a comparative example of the above embodiment with reference to FIG. 6.

Lenses 300A and 300B having configurations, in each of which plural recesses 301 are formed in line in the backside of the main body, are used in the comparative example. In each recess 301, a surface along the thickness direction of the lens body is formed into an inclined shape.

According to this configuration, in the light projecting lens 300A, the light beam guided from the light projecting element 1 to the recess 301 is refracted toward the center axis C by the inclined surface. The light beam, which enters into the lens body from the obliquely downward direction in FIG. 6 and reaches the inclined surface of the recess 301, is refracted and guided to the light receiving element 2 in the light receiving lens 300B. Therefore, the divergent light beam can be output to the neighborhood of the sensor by the region contiguous with the array of the recesses 301 in the thickness direction and the array of the recesses 301.

However, as illustrated by an extra-thick arrow P in FIG. 6, in the light projecting lens 3A having the configuration, a light beam that is multiply-reflected in the minute recess 301 may impinge on the lens body from the direction different from the direction toward the center axis C, and the light beam may be output in a direction deviating from the region expected as the optical path of each detecting light beam. In the light receiving lens 3B, a light beam from a direction different from the direction expected as the optical path of the receivable reflected light beam may be guided to the light receiving element 2 by the reflection of the light beam from the recess 301.

Thus, the use of the configuration, in which the light beam diverges by the array of the minute recesses 301 in the backside of the lens body, hardly ensures the detection accuracy. Additionally, it is necessary to use a complicated die in order to mold the lens member having the minute recesses 301, which results in a cost increase.

On the other hand, in the lens member 3 in FIGS. 1 to 5, the protrusion 31 extended continuously along the radial direction is formed on the backside of the lens body 30, so that the lens member 3 can be molded without complicating the die. The inclined surface can be aligned with the whole region where the light beam from the light projecting element 1 and the light beam to the light receiving element 2 spread by forming the inclined surface 32 in the substantially whole region of the protrusion 31 as illustrated in FIG. 5. Therefore, there is no risk that the light beam with which a corner of the boundary between the inclined surface 32 and the notch is irradiated travels in the unexpected direction. Accordingly, the detection accuracy can be ensured.

In the above embodiment, one protrusion 31 is formed in the central portion of the lens body 30. However, the number of protrusions 31 and the position at which the protrusion 31 is formed are not limited to the above embodiment.

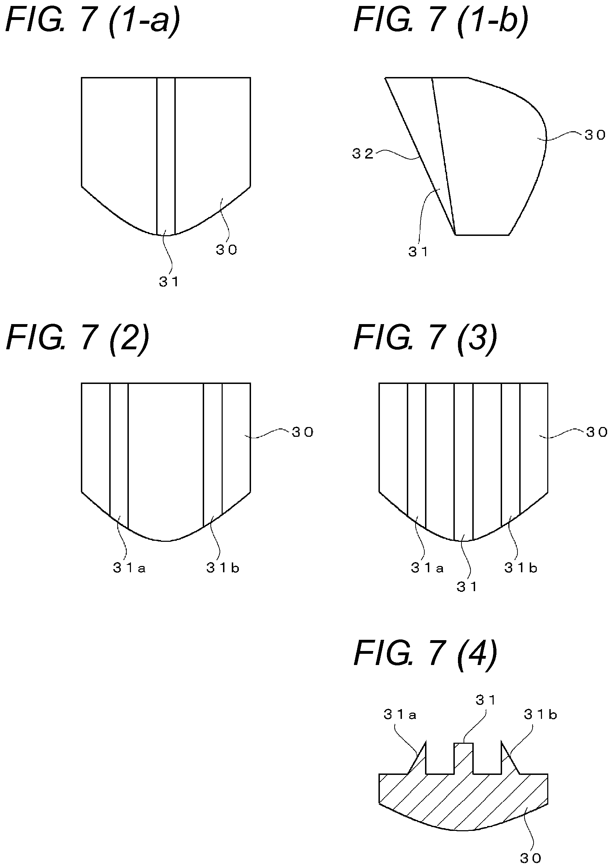

FIGS. 7(1) to 7(4) illustrate one lens (one of the light projecting lens 3A and the light receiving lens 3B) in the lens member 3 in modifications of the formation of the protrusion 31.

FIGS. 7(1-a) and 7(1-b) are a rear view and a side view of the lens based on the configuration of the above embodiment in FIGS. 1 to 4. The protrusion 31 is formed in the central portion in the crosswise direction of the lens body 30, and the backside 32 is inclined by gradually changing the thickness portion. FIGS. 7(1-a) and 7(1-b) illustrate a basic configuration of the protrusion 31.

FIGS. 7(2) and 7(3) illustrate lens bodies 30, in which the number of protrusions is increased while the basic configuration is maintained.

In FIG. 7(2), the pair of protrusions 31a and 31b is disposed not in the central portion of the lens body 30, but along the side edges of the lens body 30. In FIG. 7(3), the protrusion 31 similar to that in the central portion in FIG. 7(1) and the protrusions 31a and 31b in FIG. 7(2) are disposed.

The lens body 30 is not limited to the modifications in FIGS. 7(2) and 7(3). The number of protrusions 31 is increased within the range where the protrusion 31 does not influence the detection of the condensing optical system, which allows the intensity of the second detecting light beam to be enhanced in the divergent-reflection-type optical system to stabilize the detection in the short distance.

In the case that the number of protrusions 31 is increased, as illustrated in FIG. 7(4), sectional shapes of protrusions 31a and 31b on both sides are formed into right triangular shapes, and surfaces corresponding to hypotenuses of the right triangles may be inclined while positioned outside. Therefore, in the light projecting lens 3A, the light beams passing through the inclined surfaces of the protrusions 31, 31a, and 31b can be output while condensing in the center portion of the lens body 30. In the light receiving lens 3B, the reflected light beams, which impinge on the center portion of the lens body 30 to reach the inclined surfaces of the protrusions 31, 31a, and 31b according to the inverse passage of the light projecting lens 3A, can collect into the light receiving element 2.

Advantages of the first embodiment are summarized below.

In the first embodiment, the lens member 3 including the protrusion 31 in the backside is used, so that the lens bodies 30 of the light projecting lens 3A and the light receiving lens 3B can be maintained in the same size as is conventional one. Because the protrusion 31 has the size that is accommodated in each of the light guide paths 43A and 43B of the lens holder 4, it is not necessary to change the configuration and the size of the lens holder 4.

Therefore, the optical system can be maintained in the same size as is conventional one. On the other hand, because both the detection in the long distance and the detection in the short distance can be performed by the two kinds of the detecting light beams, detection performance is largely enhanced compared with the conventional restricted-reflection-type senor or diffuse-reflection-type sensor.

Because the lens member 3 is easily molded, the cost does not increase. Therefore, the compact reflection-type photoelectric sensor in which the detection capacity is enhanced can be provided at a reasonable price.

Next, four optical systems according to embodiments, in each of which the two kinds of the detecting light beams are similarly generated by a part except the lens member 3, will be described with reference to FIGS. 8 to 11. Because the optical system of each of embodiments has the same basic configuration as that in FIG. 1, equivalent component are designated by the same numerals, and their further description is omitted or simplified. In FIGS. 8 to 11, the alternate long and short dash line indicates the optical paths of the first detecting light beam and the reflected light beam thereof, and the alternate long and two short dashes line indicates the optical paths of the second detecting light beam and the reflected light beam thereof. The workpiece W_{F} is located distant from the sensor, and the workpiece W_{N} is located close to the sensor.

In the optical system of the embodiment in FIG. 8, a pair of protrusions 71 and 71 is formed in the backside of the cover 7 attached to the front surface of the lens holder 4. FIG. 8(1) illustrates an entire configuration of the optical system, and FIG. 8(2) illustrates a rear view of the cover 7.

As illustrated in FIG. 8(2), the protrusions 71 are arrayed in the center portion of the width in the crosswise direction of the cover 7. Like the protrusion 31 of the lens member 3 of the foregoing embodiment, the thickness of one of the protrusions 71 increases toward the other protrusion 71, whereby a rear surface 72 constitutes the inclined surface.

When the cover 7 is attached to the lens holder 4, as illustrated in FIG. 8(1), one of the protrusions 71 is located in front of the light projecting lens 3A, and the other protrusion 71 is located in front of the light receiving lens 3B.

Like the foregoing embodiment, the lens member 3 is formed by coupling the light projecting lens 3A and the light receiving lens 3B. On the other hand, a general condensing lens is used as each of the lens 3A and 3B of this embodiment.

A majority of the light beam light, which is output from the projecting element 1 to impinge on the light projecting lens 3A, is gently refracted to pass through the cover 7, and output as the first detecting light beam over a long distance. The light beam reflected by the workpiece W_{F}, on which the first detecting light beam traveling to the position close to the center axis C impinges, travels while separating gradually from the center axis C, passes through the cover 7 and the light receiving lens 3B, and is guided to the light receiving element 2.

The inclined surface 72 of the protrusion 71 of the cover 7 is irradiated with part of the light beam passing through the light projecting element 1 and the light projecting lens 3A, and the light beam is largely refracted by prism action of the inclined surface 72 to intersect the center axis C and the optical path on the light receiving side at the position close to the sensor. The light beam acts as the second detecting light beam.

The second detecting light beam that is reflected by the workpiece W_{N} located close to the sensor travels in the direction in which the second detecting light beam cannot be guided to the light receiving element 2. However, the reflected light beam entering into the protrusion 71 of the cover 7 is largely refracted by the inclined surface 72, impinges on the light receiving lens 3B, and is guided to the light receiving element 2. Therefore, the workpiece W_{N} located further forward than the region where the workpiece W_{N} is detected by the first detecting light beam can be detected by the second detecting light beam.

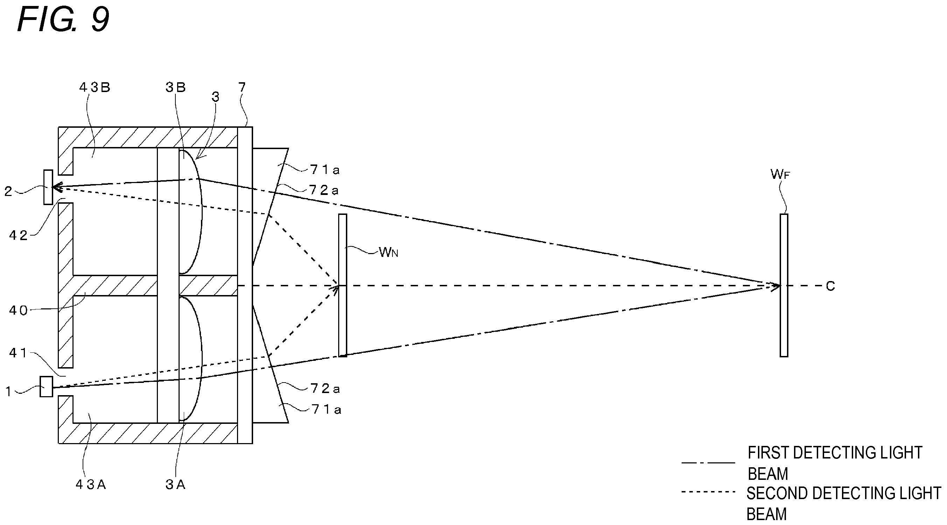

In the embodiment in FIG. 9, the cover 7 including the protrusion is used, and a pair of protrusions 71a and 71a is formed on the front surface side of the cover 7. Unlike the embodiment in FIG. 8, the thickness of each protrusion 71a decreases toward the other protrusion 71a. Accordingly, the inclined surface 72a changes inversely with the inclined surface 72 in FIG. 8.

In the configuration in FIG. 9, a majority of the light beam light, which is output from the projecting element 1 to impinge on the light projecting lens 3A, is gently refracted to pass through the cover 7, and output as the first detecting light beam over a long distance. The light beam reflected by the workpiece W_{F}, on which the first detecting light beam traveling to the position close to the center axis C impinges, travels while separating gradually from the center axis C, passes through the cover 7 and the light receiving lens 3B, and is guided to the light receiving element 2.

The light beam that impinges on the protrusion 71a of the cover 7 from the light projecting lens 3A is largely refracted by the inclined surface 72a of the cover 7, and intersects the center axis C and the optical path on the light receiving side at the position close to the sensor. The light beam acts as the second detecting light beam.

The second detecting light beam that is reflected by the workpiece W_{N} located close to the sensor travels in the direction in which the second detecting light beam cannot be guided to the light receiving element 2. However, the reflected light beam entering into the protrusion 71a on the light receiving side is largely refracted by the inclined surface 72a, and converted into a light beam that is guided to the light receiving element 2 through the light receiving lens 3B. Therefore, the workpiece W_{N} located further forward than the region where the workpiece W_{N} is detected by the first detecting light beam can be detected by the second detecting light beam.

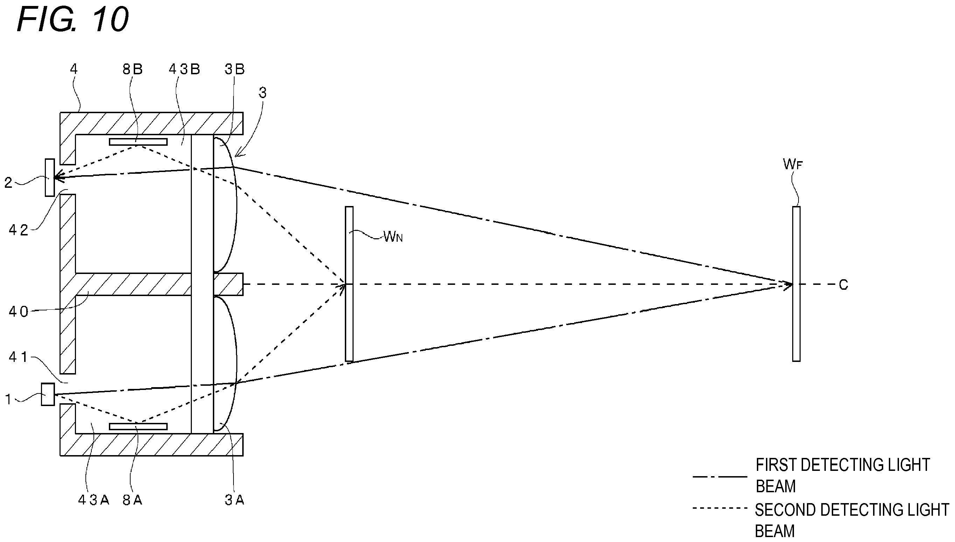

In the example in FIG. 10, which is an example useful for understanding the invention, the optical path of the second detecting light beam is ensured by providing mirrors 8A and 8B in light guide paths 43A and 43B in the lens holder 4, respectively. The mirrors 8A and 8B are attached to inner wall surfaces on the circumferential wall sides of the light guide paths 43A and 43B or buried into the inner wall surfaces while the front surfaces of the mirrors 8A and 8B are exposed, respectively.

In this example, the light projecting lens 3A and the light receiving lens 3B are constructed by general condensing lenses. Although not illustrated in FIG. 10, the cover 7 attached to the opening end surface of the lens holder 4 may be a general cover that does not include a protrusion.

A majority of the light beam entering into the light projecting lens 3A is gently refracted, output as the first detecting light beam coming gradually close to the center axis C, and is condensed to the distant point. However, the light beam from the light projecting element 1 toward the circumferential wall of the light guide path 43A is regularly reflected and largely refracted by the mirror 8A. Therefore, the same effect as that of the inclined surface 32 in the embodiment in FIG. 1 is generated to output the largely-refracted light beam from the lens 3A. The light beam acts as the second detecting light beam.

The light beam reflected by the workpiece W_{F}, on which the first detecting light beam traveling to the position close to the center axis C impinges, travels while separating gradually from the center axis C, passes through the light receiving lens 3B, and is guided to the light receiving element 2. There is a high possibility that the second detecting light beam reflected near the sensor is guided to the circumferential wall of the light guide path 43B through the light receiving lens 3B. However, the second detecting light beam reflected near the sensor can be reflected toward the light receiving element 2 by the mirror 8B on the inner wall surface, and form an image on the light receiving element 2.

Therefore, even in the configuration in FIG. 10, like the configuration in which the protrusion is provided in the lens member 3 or the cover 7, the second detecting light beam is generated, the reflected light beam of the second detecting light beam is received with a high degree of certainty, and the detection can be performed in both the long distance and the short distance.

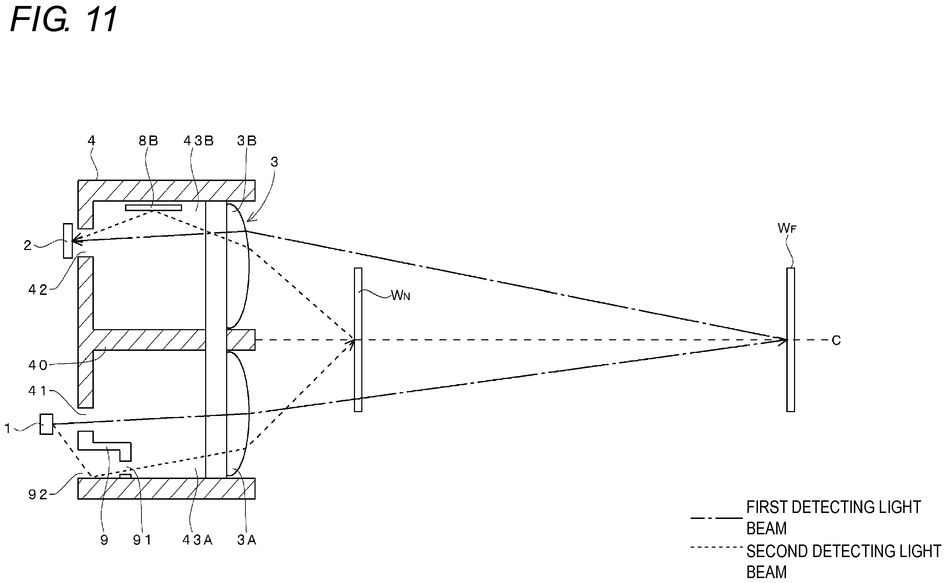

In the example in FIG. 11, which is an example useful for understanding the invention, the optical member that refracts the light beam entering into the circumferential wall from the light projecting element 1 toward the light projecting lens 3A is used like the example in FIG. 10. In the light guide path 43A on the light projecting side of this embodiment, a diaphragm member 9, which includes apertures 91 and 92 in the leading end and the tailing end thereof, is provided instead of the mirror 8A. The diaphragm member 9 condenses the light beam by restricting the optical path of the light beam. The diaphragm member 9 is integrally provided on the inner wall surface of the circumferential wall in the rear end portion of the light guide path 43A.

In the example in FIG. 11, the diaphragm member 9 receives the light beam, which travels from the light projecting element 1 toward the circumferential wall of the lens holder 4, from the aperture 92 on the rear surface side, condenses the light beam, and guides the light beam forward through the front aperture 91. Therefore, the light beam can impinge on the light projecting lens 3A from the same direction as the light beam reflected by the mirror 8A of the example in FIG. 10, be largely refracted by the light projecting lens 3A, and be output as the second detecting light beam, which crosses the center axis C at the position close to the sensor.

In the light guide path 43B on the light receiving side, the mirror 8B is provided at the same position as the example in Fig. 10. Therefore, like the example in FIG. 10, the light beam, which is reflected at the position close to the sensor to reach the inner wall surface on the circumferential wall side through the light receiving lens 3B, can be reflected by the mirror 8B and guided to the light receiving element 2.

In the examples in FIGS. 10 and 11, the simple optical member is added to the lens holder 4 without changing the configuration of the condensing optical system, thereby ensuring the optical path of the second detecting light beam for the short-distance detection. The optical members are provided in the lens holder 4, so that the conventional size of the lens holder 4 can be maintained. There is no risk of largely increasing the cost because each of the members has the simple configuration.

Therefore, in the examples in FIGS. 10 and 11, the compact reflection-type photoelectric sensor in which the detection capacity is enhanced can be provided at a reasonable price.

In the examples in FIGS. 10 and 11, in the case that a ratio of the reflected light beam, which impinges on the light receiving element 2 through the light receiving lens 3B without traveling toward the circumferential wall of the light guide path 43B, to the second detecting light beam is high, the mirror 8B may not be provided in the light guide path 43B. Similarly, in the embodiment in FIGS. 8 and 9, the protrusions 71 or 71a may be attached only to the points corresponding to the light projecting side of the cover 7. In any embodiment, the light-receiving-side function related to the diffuse optical system may be introduced in order to enhance the detection accuracy in the short distance.

### DESCRIPTION OF SYMBOLS

- 1: Light projecting element
- 2: Light receiving element
- 3: Lens member
- 3A: Light projecting lens
- 3B: Light receiving lens
- 4: Lens holder
- 7: Cover
- 30: Lens body
- 31, 71, 71a: Protrusion
- 32, 72, 72a: Inclined surface
- 8A, 8B: Mirror
- 9: Diaphragm member

## Claims

1. A reflection-type photoelectric sensor, wherein a light projecting element (1), a light receiving element (2), a light projecting lens (3A), and a light receiving lens (3B) are disposed with such a relationship that part of a reflected light beam of a light beam output from the light projecting element (1) through the light projecting lens (3A) can be guided to the light receiving element (2) through the light receiving lens (3B), the light projecting lens (3A) and the light receiving lens (3B) being attached to a lens holder (4),
a first detecting light beam is output by the light projecting element (1) and the light projecting lens (3A), the first detecting light beam being condensed at a position, which is a predetermined distance away from the light projecting lens (3A), and an optical path of a light beam entering into the light receiving lens (3B) intersects an optical path of the first detecting light beam,
**characterized in that**
a means (31, 71, 71a) for generating a second detecting light beam with the light projecting element (1) as a light source attached to the lens holder (4) or disposed as part of the lens holder (4), the second detecting light beam intersecting the optical path of the light beam entering into the light receiving lens (3B) at a position before the region where the first detecting light beam intersects the optical path of the light beam entering into the light receiving lens (3B),
wherein the means (31, 71, 71a) for generating a second detecting light beam is a protrusion (31, 71, 71a), wherein the protrusion (31) is a narrow lens body in which a direction along a direction in which the light projecting lens (3A) and the light receiving lens (3B) are lined up is a lengthwise direction, and a thickness of the protrusion (31, 71, 71a) increases or decreases toward the other lens, wherein the protrusion (31) has two side surfaces and both side surfaces of the protrusion (31) are formed into triangles, and wherein a narrow rear surface (32) between the side surfaces is formed into an inclined surface that is inclined along the direction in which the light projecting lens (3A) and the light receiving lens (3B) are lined up.

2. The reflection-type photoelectric sensor according to claim 1, wherein the light projecting lens (3A) includes a lens body constituted by a condensing lens and the protrusion that protrudes from part of a backside of the lens body, and the protrusion is contiguous with part of the lens body.

3. The reflection-type photoelectric sensor according to claim 2, wherein the light receiving lens (3B) includes a lens body constituted by a condensing lens and a light-receiving-side protrusion that protrudes from part of a backside of the lens body,
the light-receiving-side protrusion includes an inclined surface that is inclined along a direction in which the light projecting lens (3A) and the light receiving lens (3B) are lined up, and the light-receiving-side protrusion and part of the lens body that is contiguous with the light-receiving-side protrusion serve as a means for guiding a reflected light beam of the second detecting light beam entering into the light receiving lens (3B) to the light receiving element (2).

4. The reflection-type photoelectric sensor according to claim 1, wherein the light projecting lens (3A) and the light receiving lens (3B) are condensing lenses,
a cover body including the protrusion that protrudes from a region facing part of the light projecting lens (3A) is attached to a front end of the lens holder (4), and the protrusion is contiguous with part of the cover body.

5. The reflection-type photoelectric sensor according to claim 4, wherein the cover body includes a light-receiving-side protrusion that protrudes from a region facing part of the light receiving lens (3B), the light-receiving-side protrusion includes an inclined surface that is inclined along a direction in which the light projecting lens (3A) and the light receiving lens (3B) are lined up, and
the light-receiving-side protrusion and part of the cover body that is contiguous with the light-receiving-side protrusion serve as a means for changing a direction of an optical path of a reflected light beam of the second detecting light beam entering into the cover body to a direction toward the light receiving element (2) through the light receiving lens (3B).

6. The reflection-type photoelectric sensor according to claim 2 or 4, wherein at least one protrusion is provided with respect to the light projecting lens (3A).

7. The reflection-type photoelectric sensor according to claim 3 or 5, wherein the protrusion and the light-receiving-side protrusion are narrow lens bodies in each of which an inclined direction of the inclined surface is set to the lengthwise direction, and at least one protrusion and at least one light-receiving-side protrusion are provided with respect to the light projecting lens (3A) and the light receiving lens (3B), respectively.

## Patentansprüche

1. Photoelektrischer Sensor eines Reflektionstyps, wobei ein Lichtprojektionselement (1), ein Lichtempfangselement (2), eine Lichtprojektionslinse (3A) und ein Lichtempfangslinse (3B) in einer solchen Beziehung angeordnet sind, dass ein Teil eines reflektierten Lichtstrahls eines Lichtstrahlausgangs aus dem Lichtprojektionselement (1) durch die Lichtprojektionslinse (3A) zu dem Lichtempfangselement (2) durch die Lichtempfangslinse (3B) geführt werden kann, wobei die Lichtprojektionslinse (3A) und die Lichtempfangslinse (3B) an einem Linsenhalter (4) befestigt sind,
wobei ein erster Erfassungslichtstrahl durch das Lichtprojektionselement (1) und die Lichtprojektionslinse (3A) ausgegeben wird, wobei der erste Erfassungslichtstrahl an einer Position gesammelt wird, welche von der Lichtprojektionslinse (3A) einen vorgegebene Abstand entfernt ist, und wobei ein optischer Pfad eines Lichtstrahls, der in die Lichtempfangslinse (3B) eintritt, mit einem optischen Pfad des ersten Erfassungslichtstrahl kreuzt,
**gekennzeichnet durch**
ein Mittel (31, 71, 71A) zum Erzeugen eines zweiten Erfassungslichtstrahls mit dem Lichtprojektionselement (1) als eine Lichtquelle, die an dem Linsenhalter (4) befestigt ist oder als ein Teil des Linsenhalters (4) angeordnet ist, wobei der zweite Erfassungslichtstrahl den optischen Pfad des Lichtstrahls, der in die Lichtempfangslinse (3B) eintritt, an einer Position vor dem Bereich kreuzt, wo der erste Erfassungslichtstrahl den optischen Pfad des Lichtstrahls kreuzt, der in die Lichtempfangslinse (3B) eintritt,
wobei das Mittel (31, 71, 71A) zum Erzeugen eines zweiten Erfassungslichtstrahls ein Vorsprung (31, 71, 71A) ist, wobei der Vorsprung (31) ein schmaler Linsenkörper ist, bei dem eine Richtung entlang einer Richtung, in welcher die Lichtprojektionslinse (3A) und die Lichtempfangslinse (3B) ausgerichtet sind, eine Längenrichtung ist, und eine Dicke des Vorsprung (31, 71, 71A) sich in Richtung der anderen Linse vergrößert oder verkleinert, wobei der Vorsprung (31) zwei Seitenflächen hat und beide Seitenflächen des Vorsprung (31) zu Dreiecken gebildet sind, und wobei eine schmale Rückseite (32) zwischen den Seitenflächen in eine geneigte Fläche gebildet ist, die entlang der Richtung geneigt ist, in welcher die Lichtprojektionslinse (3A) und die Lichtempfangslinse (3B) ausgerichtet sind.

2. Photoelektrischer Sensor eines Reflektionstyps gemäß Anspruch 1, wobei die Lichtprojektionslinse (3A) einen Linsenkörper, der durch eine Sammellinse gebildet ist, und den Vorsprung umfasst, der von einem Teil der Rückseite des Linsenkörpers vorspringt, und der Vorsprung mit einem Teil des Linsenkörpers zusammenhängend ist.

3. Photoelektrischer Sensor eines Reflektionstyps gemäß Anspruch 2, wobei die Lichtempfangslinse (3B) einen Linsenkörper, der durch eine Sammellinse gebildet ist, und einen Vorsprung auf der Lichtempfangsseite umfasst, der von der Rückseite des Linsenkörpers vorspringt,
wobei der Vorsprung auf der Lichtempfangsseite eine geneigte Fläche umfasst, die entlang einer Richtung geneigt ist, in welcher die Lichtprojektionslinse (3A) und die Lichtempfangslinse (3B) ausgerichtet sind, und der Vorsprung auf der Lichtempfangsseite und ein Teil des Linsenkörpers, der mit dem Vorsprung auf der Lichtempfangsseite zusammenhängend ist, als ein Mittel zum Führen eines reflektierten Lichtstrahl des zweiten Erfassungslichtstrahls, der in die Lichtempfangslinse (3B) eintritt, zu dem Lichtempfangselement (2) dient.

4. Photoelektrischer Sensor eines Reflektionstyps gemäß Anspruch 1, wobei die Lichtprojektionslinse (3A) und die Lichtempfangslinse (3B) Sammellinsen sind,
wobei ein Abdeckkörper, der den Vorsprung umfasst, der von einem Bereich vorspringt, der einem Teil der Lichtprojektionslinse (3A) gegenüberliegt, an einem vorderen Ende des Linsenhalters (4) befestigt ist, und der Vorsprung mit einem Teil des Abdeckkörpers zusammenhängend ist.

5. Photoelektrischer Sensor eines Reflektionstyps gemäß Anspruch 4, wobei der Abdeckkörper einen Vorsprung auf der Lichtempfangsseite umfasst, der von einem Bereich vorspringt, der einem Teil der Lichtempfangslinse (3B) gegenüberliegt, wobei der Vorsprung auf der Lichtempfangsseite eine geneigte Fläche umfasst, die entlang einer Richtung geneigt ist, in welcher die Lichtprojektionslinse (3A) und die Lichtempfangslinse (3B) ausgerichtet sind, und
wobei der Vorsprung auf der Lichtempfangsseite und ein Teil des Abdecckörpers, der mit dem Vorsprung auf der Lichtempfangsseite zusammenhängend ist, als ein Mittel zum Andern einer Richtung eines optischen Pfads eines reflektierten Lichtstrahls des zweiten Erfassungslichtstrahls, der in den Abdeckkörper eintritt, in eine Richtung des Lichtempfangselements (2) durch die Lichtempfangslinse (3B) dient.

6. Photoelektrischer Sensor eines Reflektionstyps gemäß Anspruch 2 oder 4, wobei zumindest ein Vorsprung mit Bezug auf die Lichtprojektionslinse (3A) vorgesehen ist.

7. Photoelektrischer Sensor eines Reflektionstyps gemäß Anspruch 3 oder 5, wobei der Vorsprung und der Vorsprung auf der Lichtempfangsseite schmale Linsenkörper sind, wobei in jedem von diesen eine geneigte Richtung der geneigten Fläche in eine Längenrichtung eingestellt ist, und zumindest ein Vorsprung und zumindest ein Vorsprung auf der Lichtempfangsseite jeweils mit Bezug auf die Lichtprojektionslinse (3A) und die Lichtempfangslinse (3B) vorgesehen sind.

## Revendications

1. Capteur photoélectrique de type à réflexion, dans lequel un élément de projection de lumière (1), un élément de réception de lumière (2), une lentille de projection de lumière (3A) et une lentille de réception de lumière (3B) sont disposés selon une relation telle qu'une partie d'un faisceau de lumière réfléchi d'un faisceau de lumière émis par l'élément de projection de lumière (1) à travers la lentille de projection de lumière (3A) puisse être guidée vers l'élément de réception de lumière (2) par l'intermédiaire de la lentille de réception de lumière (3B), la lentille de projection de lumière (3A) et la lentille de réception de lumière (3B) étant fixées à un support de lentilles (4),
un premier faisceau de lumière de détection est émis par l'élément de projection de lumière (1) et par la lentille de projection de lumière (3A), le premier faisceau de lumière de détection étant condensé au niveau d'une position, qui se trouve à une distance d'éloignement prédéterminée de la lentille de projection de lumière (3A), et un trajet optique d'un faisceau de lumière pénétrant la lentille de réception de lumière (3B) coupe un trajet optique du premier faisceau de lumière de détection,
**caractérisé par**
un moyen (31, 71, 71a) destiné à générer un second faisceau de lumière de détection au moyen de l'élément de projection de lumière (1) en tant que source de lumière fixée au support de lentilles (4) ou disposée en tant que partie du support de lentilles (4), le second faisceau de lumière de détection coupant le trajet optique du faisceau de lumière pénétrant la lentille de réception de lumière (3B) à une position se trouvant avant la région dans laquelle le premier faisceau de lumière de détection coupe le trajet optique du faisceau de lumière pénétrant la lentille de réception de lumière (3B),
dans lequel le moyen (31, 71, 71a) destiné à générer un second faisceau de lumière de détection est une saillie (31, 71, 71a), dans lequel la saillie (31) est un corps de lentille étroit dans lequel une direction suivant une direction dans laquelle sont alignées la lentille de production de lumière (3A) et la lentille de réception de lumière (3B) est une direction de longueur, et une épaisseur de la saillie (31, 71, 71a) va en augmentant ou en diminuant en direction de l'autre lentille, dans lequel la saillie (31) comporte deux surfaces latérales et les deux surfaces latérales de la saillie (31) sont formées en triangles, et dans lequel une surface arrière étroite (32) entre les surfaces latérales est formée en une surface inclinée qui est inclinée dans la direction dans laquelle sont alignées la lentille de projection de lumière (3A) et la lentille de réception de lumière (3B).

2. Capteur photoélectrique de type à réflexion selon la revendication 1, dans lequel la lentille de projection de lumière (3A) comprend un corps de lentille constitué par une lentille condensatrice et par la saillie qui fait saillie d'une partie d'un côté arrière du corps de lentille, et la saillie est contiguë à une partie du corps de lentille.

3. Capteur photoélectrique de type à réflexion selon la revendication 2, dans lequel la lentille de réception de lumière (3B) comprend un corps de lentille constitué par une lentille condensatrice et par une saillie côté réception de lumière qui fait saillie d'une partie d'un côté arrière du corps de lentille,
la saillie côté réception de lumière comprend une surface inclinée qui est inclinée dans une direction dans laquelle sont alignées la lentille de projection de lumière (3A) et la lentille de réception de lumière (3B), et la saillie côté réception de lumière et la partie du corps de lentille qui est contiguë à la saillie côté réception de lumière servent de moyen de guidage, vers l'élément de réception de lumière (2), d'un faisceau de lumière réfléchi du second faisceau de lumière de détection pénétrant la lentille de réception de lumière (3B).

4. Capteur photoélectrique de type à réflexion selon la revendication 1, dans lequel la lentille de projection de lumière (3A) et la lentille de réception de lumière (3B) sont des lentilles condensatrices,
un corps de couvercle comprenant la saillie qui fait saillie d'une région faisant face à une partie de la lentille de projection de lumière (3A) est fixé à une extrémité avant du support de lentilles (4), et la saillie est contiguë à une partie du corps de couvercle.

5. Capteur photoélectrique de type à réflexion selon la revendication 4, dans lequel le corps de couvercle comprend une saillie côté réception de lumière qui fait saillie d'une région faisant face à une partie de la lentille de réception de lumière (3B), la saillie côté réception de lumière comprend une surface inclinée qui est inclinée dans une direction dans laquelle sont alignées la lentille de projection de lumière (3A) et la lentille de réception de lumière (3B), et
la saillie côté réception de lumière et la partie du corps de couvercle qui est contiguë à la saillie côté réception de lumière servent de moyen permettant de modifier une direction d'un trajet optique d'un faisceau de lumière réfléchi du second faisceau de lumière de détection pénétrant le corps de couvercle en une direction vers l'élément de réception de lumière (2) par l'intermédiaire de la lentille de réception de lumière (3B).

6. Capteur photoélectrique de type à réflexion selon la revendication 2 ou la revendication 4, dans lequel au moins une saillie est prévue par rapport à la lentille de projection de lumière (3A).

7. Capteur photoélectrique de type à réflexion selon la revendication 3 ou la revendication 5, dans lequel la saillie et la saillie côté réception de lumière sont des corps de lentille étroits dans chacun desquels une direction inclinée de la surface inclinée est définie dans la direction de longueur, et au moins une saillie et au moins une saillie côté réception de lumière sont prévues par rapport respectivement à la lentille de projection de lumière (3A) et à la lentille de réception de lumière (3B).
